# EUROPÄISCHE PATENTSCHRIFT

(11) **EP 2 751 738 B1**
(45) Veröffentlichungstag und Bekanntmachung des Hinweises auf die Patenterteilung: **21.11.2018**
(21) Anmeldenummer: 12732841.7
(22) Anmeldetag: 05.07.2012
(51) Int. Cl.: G06K 9/00, B60Q 1/14

(54) **VERFAHREN UND VORRICHTUNG ZUM ERKENNEN EINER BELEUCHTETEN FAHRBAHN VOR EINEM FAHRZEUG**
METHOD AND DEVICE FOR DETECTING AN ILLUMINATED ROADWAY IN FRONT OF A VEHICLE
PROCÉDÉ ET DISPOSITIF POUR LA DÉTECTION D'UNE VOIE ÉCLAIRÉE DEVANT UN VÉHICULE

(30) Priorität: 31.08.2011 DE 102011081885
(43) Veröffentlichungstag der Anmeldung: 09.07.2014
(73) Patentinhaber: Robert Bosch GmbH, 70442 Stuttgart (DE)
(72) Erfinder: FOLTIN, Johannes, 71254 Ditzingen (DE)
(86) Internationale Anmeldenummer: PCT/EP2012/063079
(87) Internationale Veröffentlichungsnummer: WO 2013/029841

(56) Entgegenhaltungen:
- EP-A2- 2 116 958
- WO-A1-2011/015625
- UWE-PHILIPP KÄPPELER: "Erkennung und Verfolgung von Leitpfosten zur Spurprädiktion", DIPLOMARBEIT UNIVERSITAET STUTTGART, XX, XX, 30. September 2003 (2003-09-30), Seite complete, XP002461061,

## Beschreibung

### Stand der Technik

Die vorliegende Erfindung bezieht sich auf ein Verfahren zum Erkennen einer beleuchteten Fahrbahn vor einem Fahrzeug, auf eine Vorrichtung zum Erkennen einer beleuchteten Fahrbahn vor einem Fahrzeug sowie auf ein entsprechendes Computerprogrammprodukt.

In durchgehend beleuchteten Gebieten soll nach europäischem Recht kein Fernlicht eingeschaltet werden. Wenn empfangenes Licht einen AC-Anteil (d.h. einen Wechselstromanteil) bzw. einen gewissem Frequenzanteil aufweist, kann auf eine vorhandene Straßenbeleuchtung geschlossen werden. Dafür ist jedoch eine hohe Abtastrate des optischen Sensors zur Erkennung von derartigen Straßenbeleuchtungseinheiten nötig, was nur mit einem kleinen Bildsensor möglich ist. Diese Lösung ist nicht nur wegen der hohen Abtastrate für Kamerasysteme problematisch, sondern auch durch die Zunahme an getakteten Lichtquellen im Automobil. Beispielsweise werden LEDs mittels Puls-Weiten-Modulierung (PWM) angesteuert. Zur Stabilisierung von Halogenlichtquellen oder zur Erzeugung von Hochspannung für Xenonlichtquellen kann z.B. ein "Zerhacken" und Transformieren oder eine Taktung der Spannung verwendet werden.

Alternativ kann die durchgehende Beleuchtung erkannt werden, indem urbanes Gebiet/ Städte erkannt wird. Dazu können Geschwindigkeitsschwellen (z.B. 50 km/h-Schwelle) verwendet werden. Eine andere Möglichkeit ist die Nutzung von Karten-/Navigationsinformationen, die anzeigen, wo eine Stadt beginnt, wobei Kartenmaterial technisch bedingt immer veraltet ist. Die Erkennung von Städten entspricht nicht der Erkennung von durchgehender Straßenbeleuchtung, da dadurch innerstädtische beleuchtete Schnellstraßen oder durchgehend beleuchtete Autobahnen (wie in Belgien) nicht erkannt werden. Auf diesen Straßen soll ebenfalls kein Fernlicht eingeschaltet werden, auch wenn diese sich nicht in einer Stadt befinden.

Die DE 10 2009 028 342 A1 beschreibt ein Verfahren zur Bestimmung, ob eine Gegend beleuchtet ist. Das Verfahren wertet Bilddaten einer Kamera aus. Die Gegend wird dann als beleuchtet bewertet, wenn wenigstens zwei stationäre Straßenbeleuchtungseinheiten anhand der Bilddaten erkannt werden und wenn diese Straßenbeleuchtungseinheiten einen räumlichen Abstand voneinander aufweisen.

Die EP 2 116 958 A2 offenbart ein Verfahren und eine Vorrichtung zum Ermitteln des Fahrbahnverlaufs im Bereich von einem Fahrzeug.

Die WO 2011/01625 A1 offenbart ein Verfahren und eine Vorrichtung zur abstandsbasierten Entprellung von Lichtcharakteristikwechseln.

### Offenbarung der Erfindung

Vor diesem Hintergrund wird mit der vorliegenden Erfindung ein Verfahren zum Erkennen einer beleuchteten Fahrbahn vor einem Fahrzeug, weiterhin eine Vorrichtung zum Erkennen einer beleuchteten Fahrbahn vor einem Fahrzeug, die dieses Verfahren verwendet sowie schließlich ein entsprechendes Computerprogrammprodukt gemäß den Hauptansprüchen vorgestellt, Vorteilhafte Ausgestaltungen ergeben sich aus den jeweiligen Unteransprüchen und der nachfolgenden Beschreibung.

Die Erfindung basiert auf der Erkenntnis, dass ein Straßenabschnitt mit durchgehender Beleuchtung mittels einer Mindestanzahl von Straßenbeleuchtungseinrichtungen erkannt werden kann, wenn die Straßenbeleuchtungseinrichtungen von einem Fahrzeug aus innerhalb einer maximal von dem Fahrzeug zurückzulegenden Strecke erkannt werden.

Die vorliegende Erfindung schafft ein Verfahren zum Erkennen einer beleuchteten Fahrbahn vor einem Fahrzeug, wobei das Verfahren die folgenden Schritte aufweist: Erkennen eines ersten Lichtobjekts als erste Straßenbeleuchtungseinrichtung; Ermitteln einer zurückgelegten Strecke des Fahrzeugs; Erkennen eines zweiten Lichtobjekts als zweite Straßenbeleuchtungseinrichtung; und Bereitstellen eines Signals, wenn die erste Straßenbeleuchtungseinrichtung und die zweite Straßenbeleuchtungseinrichtung erkannt wurden, wobei das Bereitstellen unter Verwendung der zurückgelegten Strecke erfolgt, wobei das Signal ein Erkennen einer beleuchteten Fahrbahn vor einem Fahrzeug repräsentiert, wobei im Schritt des Bereitstellens eine Information bereitgestellt wird, dass die zurückgelegte Strecke nach einem Nichterkennen einer Straßenbeleuchtungseinrichtung, größer als eine erste Referenzstrecke ist und dass im Schritt des Bereitstellens ein weiteres Signal bereitgestellt wird, wenn eine andere Straßenbeleuchtungseinrichtung erkannt wird und die zurückgelegte Strecke nach dem Nichterkennen, kleiner als eine zweite Referenzstrecke ist, wobei das weitere Signal ein Erkennen einer beleuchteten Fahrbahn vor einem Fahrzeug repräsentiert, dadurch gekennzeichnet, dass im Schritt des Bereitstellens das Signal bereitgestellt wird, wenn anschließend an ein Nichterkennen einer Straßenbeleuchtungseinrichtung eine weitere Straßenbeleuchtungseinrichtung erkannt wird, wenn die zurückgelegte Strecke nach dem Nichterkennen kleiner als die erste Referenzstrecke ist und wobei das Signal ausgesetzt wird, wenn die zurückgelegte Strecke größer als die erste Referenzstrecke ist, und kein weiteres Lichtobjekt als Straßenbeleuchtungseinrichtung erkannt wird und wobei das Signal erneut unverzögert bereitgestellt wird, wenn ein weiteres Lichtobjekt als weitere Straßenbeleuchtungseinrichtung erkannt wird, und die zurückgelegte Strecke kleiner als die zweite Referenzstrecke ist.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen.

Auch durch diese Ausführungsvariante der Erfindung in Form einer Vorrichtung kann die der Erfindung zugrunde liegende Aufgabe schnell und effizient gelöst werden.
Unter einer beleuchteten Fahrbahn kann ein durchgehend mit Straßenbeleuchtungseinrichtungen beleuchteter Straßenabschnitt verstanden werden, auf dem ein Fahrzeug voraussichtlich fahren wird. Die beleuchtete Fahrbahn kann sich innerhalb eines Erfassungsbereichs einer Kamera des Fahrzeugs in Fahrtrichtung vor dem Fahrzeug erstrecken. Die beleuchtete Fahrbahn kann sich ebenso beabstandet zu dem Fahrzeug an einem Rand des Erfassungsbereichs erstrecken. Beispielsweise kann eine beleuchtete Fahrbahn Innerorts angeordnet sein. Ebenso kann eine beleuchtete Fahrbahn auch Außerorts angeordnet sein, beispielsweise ein beleuchteter Autobahnabschnitt. Ein Lichtobjekt kann eine Lichtquelle sein, die auf einem Sensor der Kamera abgebildet ist. Unter einer zurückgelegten Strecke kann eine gefahrene Distanz verstanden werden. Unter einem Signal kann eine Information verstanden werden. Das Signal kann zumindest zwei Zustände aufweisen, wobei der erste Zustand ein Erkennen einer beleuchteten Fahrbahn repräsentiert und der zweite Zustand repräsentiert, dass keine beleuchtete Fahrbahn erkannt wird. Das Signal kann verwendet werden, um eine angepasste Lichtverteilung von Scheinwerfern des Fahrzeugs zu bestimmen.
Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.
Das Signal kann bereitgestellt werden, wenn die erste Straßenbeleuchtungseinrichtung über eine Strecke erkannt wird, die größer als eine dritte Referenzstrecke ist und/oder wenn bei dem Erkennen der zweiten Straßenbeleuchtungseinrichtung die zurückgelegte Strecke kleiner als eine vierte Referenzstrecke ist.
Durch ein Bereitstellen des Signals nachdem die zweite Straßenbeleuchtungseinrichtung innerhalb der vierten Referenzstrecke erkannt wird, nachdem die erste Straßenbeleuchtungseinrichtung über die dritte Referenzstrecke erkannt wird, kann ein durchgehend beleuchteter Straßenabschnitt erkannt werden, auch wenn die erste Straßenbeleuchtungseinrichtung verdeckt wird, bevor die zweite Straßenbeleuchtungseinrichtung erkannt wird. Beim Erkennen der zweiten Straßenbeleuchtungseinrichtung kann unmittelbar das Signal bereitgestellt werden.

Das Signal kann ferner bereitgestellt werden, wenn bei dem Erkennen der zweiten Straßenbeleuchtungseinrichtung ein Winkel zwischen einer Fahrzeuglängsachse und einer Richtung zu der ersten oder der zweiten Straßenbeleuchtungseinrichtung kleiner als ein Winkel-Schwellenwert ist und die zurückgelegte Strecke nach dem Erkennen der zweiten Straßenbeleuchtungseinrichtung größer als eine fünfte Referenzstrecke ist. Durch ein Abwarten der fünften Referenzstrecke, die gleich der dritten Referenzstrecke sein kann, kann das Signal bereitgestellt werden, wenn sich das Fahrzeug dem beleuchteten Fahrbahnabschnitt angenähert hat. Dadurch kann beispielsweise ein verfrühtes Abblenden der Scheinwerfer vor einer weithin sichtbaren Ortseinfahrt vermieden werden und eine gute Ausleuchtung der Straße vor dem Fahrzeug erreicht werden. Ebenso kann ansprechend auf das Erkennen der zweiten Straßenbeleuchtungseinrichtung ein Vorsignal bereitgestellt werden, das eine Erwartung eines baldigen Erreichens des beleuchteten Fahrbahnabschnitts repräsentiert. Dadurch kann beispielsweise ein Wiederaufblenden unterdrückt werden, nachdem ein Fremdfahrzeug das Fahrzeug kurz vor der Ortseinfahrt passiert hat.
Das Signal kann ferner bereitgestellt werden, wenn bei dem Erkennen der zweiten Straßenbeleuchtungseinrichtung der Winkel zwischen der Fahrzeuglängsachse und der Richtung zu der ersten oder der zweiten Straßenbeleuchtungseinrichtung größer als der Winkel-Schwellenwert ist und die zurückgelegte Strecke nach dem Erkennen der zweiten Straßenbeleuchtungseinrichtung größer als eine sechste Referenzstrecke ist. Durch Abwarten einer verkürzten sechsten Referenzstrecke kann schneller das Signal bereitgestellt werden, wenn beispielsweise die Ortseinfahrt in den beleuchteten Fahrbahnabschnitt aufgrund eines Hindernisses spät erkannt werden kann.
Das Signal kann ferner bereitgestellt werden, wenn während des Bereitstellens zumindest eine weitere Straßenbeleuchtungseinrichtung erkannt wird. Dadurch kann das Signal solange bereitgestellt werden, solange sich das Fahrzeug innerhalb des beleuchteten Fahrbahnabschnitts befindet.

Unter einem Nichterkennen kann verstanden werden, dass kein Lichtobjekt als Straßenbeleuchtungseinrichtung erkannt wird, beispielsweise, wenn eine Straßenbeleuchtungseinrichtung in einer Reihe von Straßenbeleuchtungseinrichtungen fehlt oder nicht erkennbar ist. Ebenso kann das Nichterkennen eine Abwesenheit von Straßenbeleuchtungseinrichtungen repräsentieren, beispielsweise an einem Ende des beleuchteten Fahrbahnabschnitts. Durch ein Abwarten der ersten Referenzstrecke, bevor das Signal nicht mehr bereitgestellt wird kann vermieden werden fälschlicherweise innerhalb des beleuchteten Fahrbahnabschnitts z.B. aufzublenden.

Durch ein unmittelbares Bereitstellen des weiteren Signals ansprechend auf ein erneutes Erkennen einer Straßenbeleuchtungseinrichtung innerhalb der zweiten Referenzstrecke kann besonders schnell reagiert werden, wenn die zurückgelegte Strecke zwischen den erkannten Straßenbeleuchtungseinrichtungen schon ein Aussetzen des Signals verursacht hat.
Vorteilhaft ist zusätzlich eine Anpassung von Parametern zum Nichterkennen (d.h. Erkennen keiner durchgehenden Beleuchtung), beispielsweise durch Anpassung, insbesondere Vergrößerung, der ersten Referenzstrecke. Dadurch wird ein Anpassungs-Effekt erreicht, wenn das Bereitstellen des Signals für die aktuelle Straßensituation zu früh erfolgte. Dies bedeutet, dass wenn zu früh das Licht zurück in die ursprüngliche Ausstrahlungscharakteristik geschaltet wird, beim nächsten Mal länger gewartet werden soll, da gegebenenfalls überall der Abstand der Straßenbeleuchtungseinrichtung sehr groß ist bzw. es viele Verdeckungen gibt.
Das Signal kann ausgesetzt werden, wenn eine Umgebungshelligkeit größer als ein Schwellenwert ist. Ebenso kann die erste Referenzstrecke in Abhängigkeit der Umgebungshelligkeit angepasst werden, dahingehend, dass bei größerer Helligkeit das Signal später ausgesetzt wird, und/oder bei geringerer Helligkeit das Signal schneller ausgesetzt wird. Dadurch kann bei der Ausfahrt aus dem beleuchteten Gebiet bei Dunkelheit schneller aufgeblendet werden.
Ferner kann auch gemäß einer besonderen Ausführungsform der Erfindung im Schritt des Bereitstellens das Signal nicht bereitgestellt werden, wenn eine Umgebungshelligkeit kleiner als ein Schwellenwert ist. Wenn es sehr dunkel ist (d.h. eine kleine Helligkeit vorherrscht), wird das "durchgehende Straßenbeleuchtungs-Signal" beispielsweise nicht erzeugt, da vermutlich keine externe Straßenbeleuchtung vorhanden ist.
Der Schritt des Ermittelns kann ausgesetzt werden, wenn eine Gierrate des Fahrzeugs größer als ein Gierraten-Schwellenwert ist. Dadurch kann die Ermittlung der Straßenbeleuchtungseinrichtungen genauer ausgeführt werden, und ansprechend auf ein Nichterkennen aufgrund einer scharfen Kurve das Signal weiterhin bereitgestellt werden, obwohl das Fahrzeug schon eine Strecke gefahren ist, die größer als die erste Referenzstrecke ist.
Gemäß einer weiteren Ausführungsform der vorliegenden Erfindung ist ein Verfahren zur Steuerung einer Lichtaussendung durch Scheinwerfer eines Fahrzeugs vorgesehen, wobei dieses die Schritte des Verfahrens gemäß einem der vorstehend beschriebenen Ausführungsformen und einen Schritt des Veränderns der Lichtaussendung durch die Scheinwerfer ansprechend auf das Signal aufweist. Eine derartige Ausführungsform der vorliegenden Erfindung bietet den Vorteil einer sehr vorteilhaften Lichtsteuerung, die den Fahrer unterstützt, die Fahrbahn vor dem Fahrzeug möglichst optimal auszuleuchten, ohne dass weitere Verkehrsteilneher beispielsweise auf Grund einer Blendung durch die Scheinwerfer des Fahrzeugs gefährdet werden.
Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Darstellung eines Fahrzeugs mit einer Vorrichtung zum Erkennen einer beleuchteten Fahrbahn gemäß einem Ausführungsbeispiel der vorliegenden Erfindung;
- Fig. 2: ein Ablaufdiagramm eines Verfahrens zum Erkennen einer beleuchteten Fahrbahn gemäß einem Ausführungsbeispiel der vorliegenden Erfindung;
- Fig. 3: ein Flussdiagramm eines Verfahrens zum Erkennen einer beleuchteten Fahrbahn gemäß einem Ausführungsbeispiel der vorliegenden Erfindung; und
- Die Figuren 4a bis 4c: Petri-Netze zu Teilverfahrensabläufen eines Verfahrens zum Erkennen einer beleuchteten Fahrbahn gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Eine Erkennung durchgehender Straßenbeleuchtung ist auch wichtig, wenn andere Fernlichtassistenten wie z.B. ein der gleitenden Leuchtweite verwandten Fernlichtassistent AHC (Adaptive High Beam Control) oder blendfreies Fernlicht eingesetzt werden sollen, da diese auch als Fernlicht-Lichtverteilung gezählt werden können. Der Algorithmus VDD (Vehicle Detection in Darkness) erkennt Straßenlaternen im Bild. Diese können genutzt werden, um eine durchgehende Straßenbeleuchtung zu erkennen.

Eine einfache Annahme, dass ein "durchgehende Straßenbeleuchtungs-Signal" (mit entsprechender Umschaltung ins Abblendlicht oder spezielle Lichtverteilung Stadtlicht) erzeugt wird, sobald eine Straßenbeleuchtung erkannt wurde, ist nicht zielführend. Es gibt Kreuzungen/ Kreisverkehre, die mit Straßenlaternen ausgestattet sind. Diese sollten nicht als durchgehende Straßenbeleuchtung erkannt werden, da sonst zu häufig abgeblendet wird. Die Straßenbeleuchtung ist ja nicht durchgehend.

Die erweiterte Annahme, dass ein eigener Standort in einem durchgehend beleuchteten Gebiet ist, wenn mehr als eine Straßenlaterne gleichzeitig sichtbar ist ebenfalls stark fehleranfällig. In einem durchgehend beleuchteten Gebiet sind nicht zwangsläufig mehrere Straßenlaternen im Sichtbereich, da durch Verdeckungen in Kurven etc. höchstens eine Straßenlaterne sichtbar sein kann. Es ist möglich, dass innerhalb eines durchgehend beleuchteten Gebiets teilweise keine Straßenlaterne im Sichtfeld ist (z.B. an Kreuzungen, scharfen Kurven, ...).

Da Straßenlaternen selbstleuchtende Lichtquellen sind, können sie schon von einer großen Entfernung gesehen werden. Ein zu frühes Erkennen der durchgehenden Straßenbeleuchtung führt zu einem (zu) frühen Abblenden. Der Fahrer verliert dadurch wertvolle Sichtweite, was nicht nötig wäre.

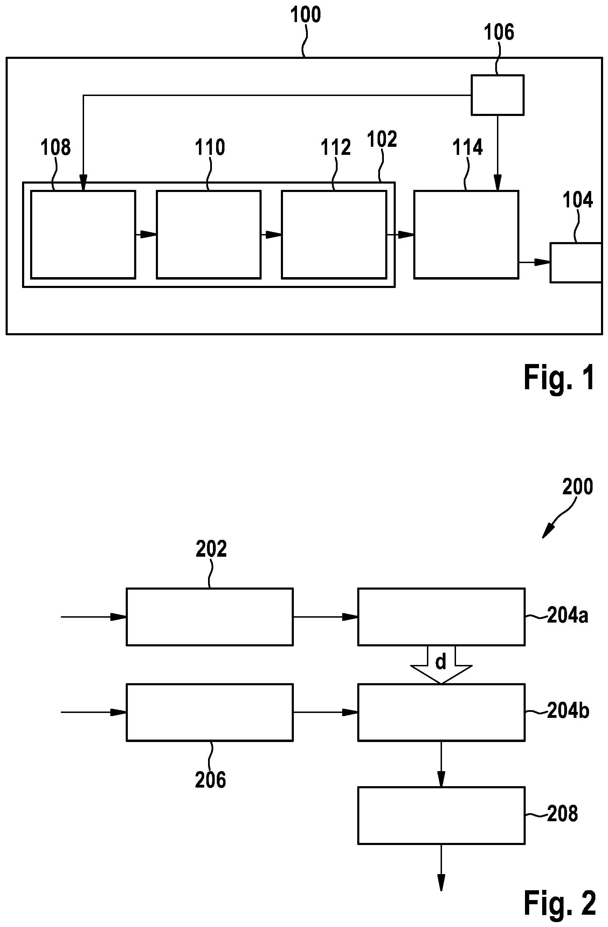

Fig. 1 zeigt eine Darstellung eines Fahrzeugs 100 mit einer Vorrichtung 102 zum Erkennen einer beleuchteten Fahrbahn vor dem Fahrzeug 100 gemäß einem Ausführungsbeispiel der vorliegenden Erfindung. Das Fahrzeug 100 weist Scheinwerfer 104 sowie eine Kamera 106 auf. Die Vorrichtung 102 weist eine Einrichtung zum Erkennen 108, eine Einrichtung zum Ermitteln 110 sowie eine Einrichtung zum Bereitstellen 112 auf. Die Einrichtung zum Erkennen 108 ist dazu ausgebildet, Bilddaten von der Kamera 106 ein einzulesen, die ein Bild der Kamera 106 repräsentieren. Wenn die Bilddaten zumindest eine Straßenbeleuchtungseinrichtung als ein Lichtobjekt abbilden, ist die Einrichtung zum Erkennen 108 dazu ausgebildet, das Lichtobjekt als Straßenbeleuchtungseinrichtung zu erkennen. Die Einrichtung zum Ermitteln 110 ist dazu ausgebildet, eine zurückgelegte Strecke des Fahrzeugs 100 zu ermitteln. Wenn die Einrichtung zum Erkennen 108 eine erste Straßenbeleuchtungseinrichtung erkannt hat, beginnt die Einrichtung zum Ermitteln 110 damit, eine Strecke zu ermitteln, die das Fahrzeug 100 zurücklegt, während die erste Straßenbeleuchtungseinrichtung in den Bilddaten erkennbar ist. Wenn die Einrichtung zum Erkennen 108 eine weitere Straßenbeleuchtungseinrichtung erkennt, stellt die Einrichtung zum Ermitteln 110 die vom Fahrzeug 100 zwischen den Punkten des Ermittelns zurückgelegte Strecke bereit und ermittelt weiter die aktuelle zurückgelegte Strecke. Die Einrichtung zum Bereitstellen 112 ist dazu ausgebildet, ein Signal bereitzustellen, wenn die erste Straßenbeleuchtungseinrichtung und die zweite Straßenbeleuchtungseinrichtung erkannt wurden. Ein Zeitpunkt des Bereitstellens wird unter Verwendung der zurückgelegten Strecke bestimmt. Beispielsweise kann das Signal bereitgestellt werden, wenn die zweite Straßenbeleuchtungseinrichtung erkannt wird, nachdem die erste Straßenbeleuchtungseinrichtung zumindest eine Referenzstrecke D1 lang erkannt worden ist, und die zurückgelegte Strecke bis zum Erkennen der zweiten Straßenbeleuchtungseinrichtung kleiner als eine Referenzstrecke D2 ist. Ebenso kann das Signal bereitgestellt werden, wenn die zweite Straßenbeleuchtungseinrichtung erkannt worden ist, während die zurückgelegte Strecke seit dem Erkennen der ersten Straßenbeleuchtungseinrichtung kleiner ist, als die Referenzstrecke D1, und nachdem das Fahrzeug 100 anschließend an das Erkennen der zweiten Straßenbeleuchtungseinrichtung eine Referenzstrecke D3 zurückgelegt hat. Das Signal wird für ein Lichtsteuergerät 114 bereitgestellt, das die Scheinwerfer 104 steuert. Das Lichtsteuergerät 114 empfängt weitere Informationen von anderen Quellen, in diesem Ausführungsbeispiel von der Kamera 106, um das Licht der Scheinwerfer 104 zu steuern. Das Signal des Steuergeräts 102 ist dazu ausgebildet, das Lichtsteuergerät 114 zu beeinflussen, wenn das Fahrzeug 100 in einen Straßenabschnitt mit durchgängiger Straßenbeleuchtung einfährt, und/oder diesen befährt, und/oder den Straßenabschnitt verlässt. Das Lichtsteuergerät 114 gibt dann für die Scheinwerfer 104 ein gesetzeskonformes Ausleuchtungsszenario vor.
Fig. 2 zeigt ein Ablaufdiagramm eines Verfahrens 200 zum Erkennen einer beleuchteten Fahrbahn vor einem Fahrzeug gemäß einem Ausführungsbeispiel der vorliegenden Erfindung. Das Verfahren 200 kann in einer Vorrichtung wie sie in Fig. 1 dargestellt ist ausgeführt werden. Das Verfahren 200 weist einen Schritt des Erkennens 202, einen Schritt des Ermittelns 204, einen weiteren Schritt des Ermittelns 206 sowie einen Schritt des Bereitstellens 208 auf. Im Schritt 202 wird ein erstes Lichtobjekt als erste Straßenbeleuchtungseinrichtung erkannt. Beim Erkennen der ersten Straßenbeleuchtungseinrichtung wird im Schritt 204a eine Ermittlung einer zurückgelegten Strecke d des Fahrzeugs gestartet. Im Schritt 206 wird ein zweites Lichtobjekt als zweite Straßenbeleuchtungseinrichtung erkannt. Beim Erkennen Der zweiten Straßenbeleuchtungseinrichtung wird im Schritt 204b die zurückgelegte Strecke d ermittelt. Im Schritt 208 wird unter Verwendung der zurückgelegten Strecke d ein Signal bereitgestellt, wenn die erste Straßenbeleuchtungseinrichtung und die zweite Straßenbeleuchtungseinrichtung erkannt wurden.

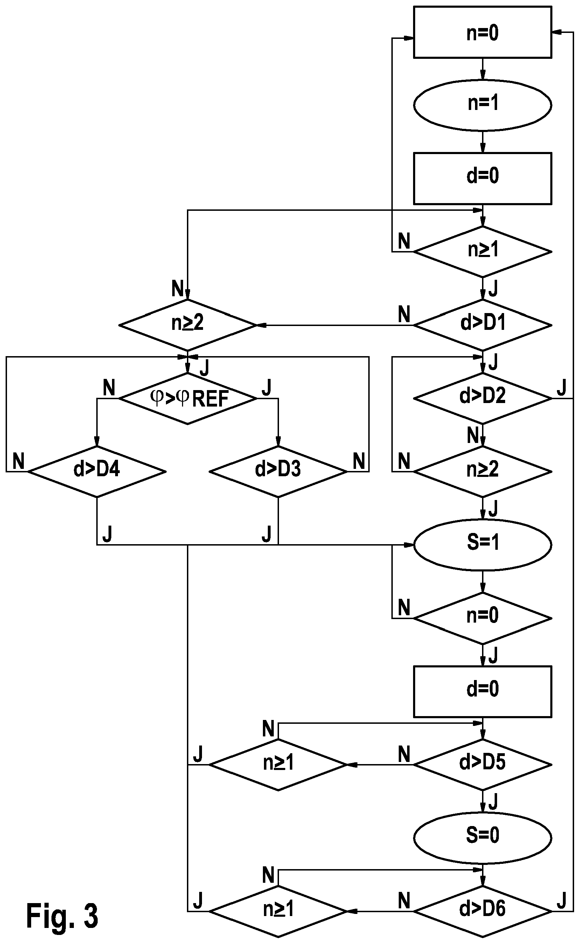

Fig. 3 zeigt ein Flussdiagramm eines Verfahrens zum Erkennen einer durchgehend beleuchteten Fahrbahn mittels Kamerabildern einer Kamera eines Fahrzeugs gemäß einem Ausführungsbeispiel der vorliegenden Erfindung.
Wenn ein erstes Lichtobjekt in Kamerabildern als erste Straßenbeleuchtungseinrichtung erkannt wird, wird ein Zähler n von null auf eins gesetzt. Ein Streckenzähler für eine zurückgelegte Strecke d des Fahrzeugs wird auf einen vorbestimmten Wert, hier null gesetzt, wenn die erste Straßenbeleuchtungseinrichtung erkannt wird. Ein Zahlenwert des Streckenzählers nimmt solange zu, solange die erste Straßenbeleuchtungseinrichtung erkannt wird. Der Zahlenwert nimmt proportional zu der zurückgelegten Strecke d zu, während das Fahrzeug die Strecke zurücklegt.
Wenn die erste Straßenbeleuchtungseinrichtung nicht mehr erkannt wird, während die zurückgelegte Strecke d kleiner als eine Referenzstrecke D1 ist, wird der Zähler n zurück auf null gesetzt.
Wenn ein zweites Lichtobjekt als zweite Straßenbeleuchtungseinrichtung erkannt wird, während die zurückgelegte Strecke d kleiner als die Referenzstrecke D1 ist, wird der Zähler n auf zwei gesetzt.
Wenn ein zweites Lichtobjekt als zweite Straßenbeleuchtungseinrichtung erkannt wird, und die erste Straßenbeleuchtungseinrichtung über eine Stecke, die größer als die Referenzstrecke D1 ist durchgehend erkannt worden ist, und die zurückgelegte Strecke d kleiner als eine Referenzstrecke D2 ist, wird ein Straßenbeleuchtungssignal S bereitgestellt. Das Straßenbeleuchtungssignal S wird zumindest so lange bereitgestellt, so lange zumindest eine Straßenbeleuchtung erkannt wird.
Wenn keine weitere Straßenbeleuchtungseinrichtung erkannt wird, während die zurückgelegte Strecke d kleiner als die Referenzstrecke D2 ist, wird der Zähler n zurück auf null gesetzt.

Wenn die zweite Straßenbeleuchtungseinrichtung erkannt wird, während die zurückgelegte Strecke d kleiner als die Referenzstrecke D1 ist, kann der Streckenzähler erneut auf den vorbestimmten Wert, hier null, gesetzt werden.
Wenn die Straßenbeleuchtungseinrichtung einen kleineren Vertikalwinkel ϕ zu dem Fahrzeug aufweist, als ein Referenzwinkel ϕREF, kann das Straßenbeleuchtungssignal S bereitgestellt werden, wenn die zurückgelegte Strecke d größer als eine Referenzstrecke D3 ist.
Wenn die erste Straßenbeleuchtungseinrichtung einen größeren Vertikalwinkel ϕ zu dem Fahrzeug aufweist, als der Referenzwinkel ϕREF kann das Straßenbeleuchtungssignal S bereitgestellt werden, wenn die zurückgelegte Strecke d größer als eine Referenzstrecke D4 ist.
Wenn keine Straßenbeleuchtungseinrichtung mehr erkannt wird, wird der Streckenzähler auf den vorbestimmten Wert, hier null, gesetzt. Der Zahlenwert des Streckenzählers nimmt solange zu, solange sich das Fahrzeug bewegt.
Das Straßenbeleuchtungssignal S kann weiterhin bereitgestellt werden, wenn, wenn die zurückgelegte Strecke d seit dem Setzen des Streckenzählers kleiner als eine Referenzstrecke D5 ist und erneut ein weiteres Lichtobjekt als Straßenbeleuchtungseinrichtung erkannt wird.
Das Straßenbeleuchtungssignal S kann ausgesetzt werden, wenn die zurückgelegte Strecke d größer als die Referenzstrecke D5 ist, und kein weiteres Lichtobjekt als Straßenbeleuchtungseinrichtung erkannt wird.
Das Straßenbeleuchtungssignal S kann erneut unverzögert bereitgestellt werden, wenn ein weiteres Lichtobjekt als weitere Straßenbeleuchtungseinrichtung erkannt wird, und die zurückgelegte Strecke d kleiner als eine Referenzstrecke D6 ist.
Besonders vorteilhaft erweist sich die anschließende Anpassung von Parametern insbesondere die Vergrößerung der Referenzstrecke D5, wodurch für einen nachfolgenden Schritt des Bereitstellens eine Anpassung an ungewöhnliche Straßen- bzw. Straßenbeleuchtungsverhältnisse durchführen lässt.

Wenn die zurückgelegte Strecke d seit dem Setzen des Streckenzählers größer als die Referenzstrecke D6 ist und kein weiteres Lichtobjekt als Straßenbeleuchtungseinrichtung erkannt wird, wird der Zähler n erneut auf null gesetzt.

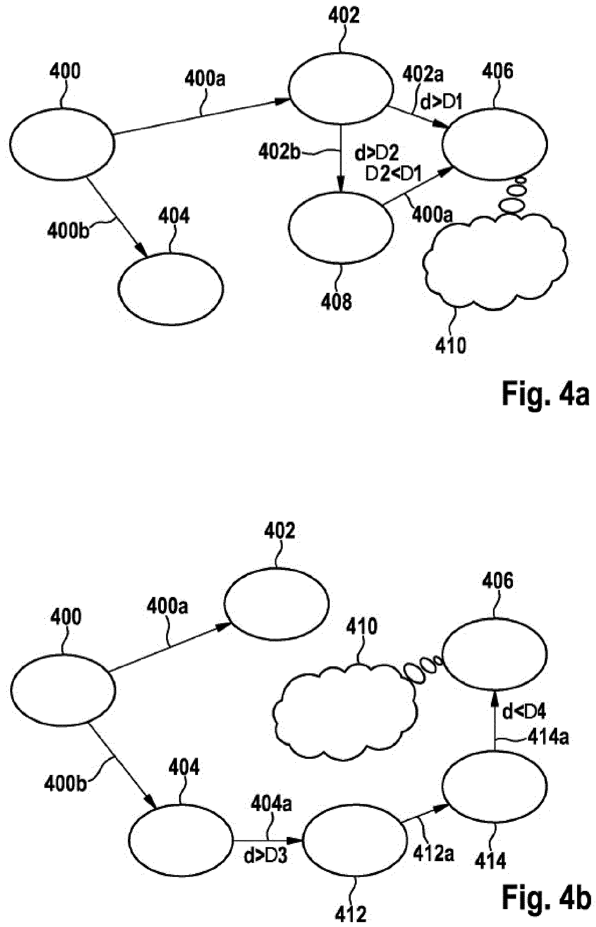

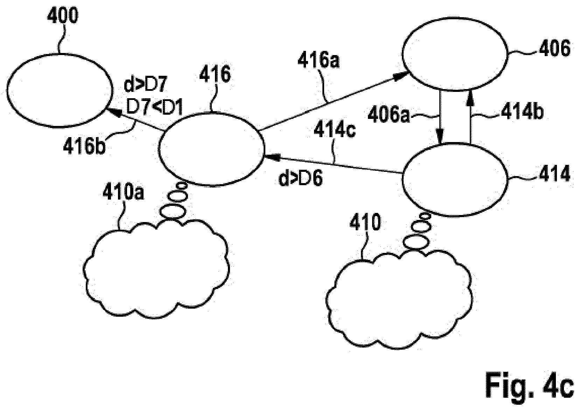

Die Figuren 4a, 4b und 4c zeigen Darstellungen von Petri-Netzen mehrerer Verfahrensteile gemäß einem Ausführungsbeispiel der vorliegenden Erfindung. Ein Petri-Netz stellt Zusammenhänge zwischen verschiedenen Zuständen und Bedingungen dar.
Fig. 4a zeigt ein Petri-Netz für den Fall, dass zumindest zwei Straßenbeleuchtungseinrichtungen kurz hintereinander erkannt werden. Die Erkennung durchgehender Straßenbeleuchtung wird (zustandsbasiert) an Hand der Anzahl und Position der Straßenlaternen im Bild, sowie deren Sichtbarkeitsdauer durchgeführt. Straßenlaternen besitzen einen festen (aber nicht definierten) Abstand, da sie feststehende Objekte sind. Es ist daher vorteilhaft, die Ermittlung der Sichtbarkeitsdauer auf Basis der Distanz durchzuführen (Distanzmessung). Sie ist damit unabhängig von der Fahrzeuggeschwindigkeit (im Gegensatz zu zeitbasierter Bewertung der Sichtbarkeitsdauer). Um eine durchgehende Straßenbeleuchtung zu erkennen, ist es notwendig eine Mindestanzahl an Straßenlaternen innerhalb einer gewissen Distanz zu erkennen. Die Distanz variiert je nach Konstellation der Straßenlaternen.
Fig. 4a zeigt den Fall, dass mehrere Straßenlaternen (≥ Mindestanzahl) im Bild erkennbar sind. Wenn die Position der Straßenlaternen im Bild weit oben ist und/oder die geschätzte Entfernung nah ist, wird die benötigte Distanz d, um ein "durchgehende Straßenlaternen-Signal" zu erzeugen, verringert: Es ist wahrscheinlich, dass sich das Fahrzeug schon direkt vor/ im durchgehend beleuchteten Bereich befindet, in dem kein Fernlicht mehr verwendet werden darf. Die zurückgelegte Entfernung wird unabhängig von der Position der Straßenlaternen gemessen. Dadurch kann beim Annähern an ein durchgehend beleuchtetes Gebiet, wenn die Straßenlaterne immer näher/ höher wandert, schneller das "durchgehende Straßenbeleuchtungs-Signal" erzeugt werden.

Beispielsweise sind zwei Straßenlaternen (=Mindestanzahl) im Bild sichtbar. Das Straßenbeleuchtungssignal wird erzeugt, wenn diese (oder eine beliebige andere Anzahl im Bild) 50 m (=D1) durchgehend sichtbar sind. Wenn sich aber mindestens eine davon nah genug am Fahrzeug (bzw. hoch genug im Bild) befindet, wird das Straßenbeleuchtungssignal schon nach 30 m (D2) erzeugt. Befinden sich die Straßenlaternen nach 49 m (d<D1 d>D2) dort, wird sofort das "durchgehende Beleuchtungssignal" erzeugt, da die gefahrene Distanz d nicht zurückgesetzt wird. Ebenso bei 31 m (<D1, >D2). Wenn die Straßenlaternen nach z.B. 20 m (<D2) nah sind (Vorbeifahrts-Signal), wird erst nach Ablauf von D2, d.h. nach weiteren 10 m das "durchgehende Beleuchtungssignal" erzeugt.
Ausgangspunkt ist ein Zustand 400 "keine Beleuchtung", in dem keine Straßenlaternen erkannt sind. Wenn eine Bedingung 400a "genug Straßenlaternen, Start Distanzmessung d" erfüllt ist, wechselt das Verfahren in einen Zustand 402 "Straßenlaterne entfernt", in dem die Straßenlaternen als entfernt erkannt sind. Wenn eine Bedingung 400b "zu wenige Straßenlaternen (<Mindestanzahl) tauchen auf", erfüllt ist, wechselt das Verfahren in einen Zustand 404 "wenige Straßenlaternen", in dem wenige Straßenlaternen erkannt sind. Im Zustand 402 wechselt das Verfahren in einen Zustand 406 "Beleuchtung", in dem eine durchgehende Straßenbeleuchtung erkannt ist, wenn die Bedingung 402a "d>D1" erfüllt ist, dass eine gefahrene Distanz größer als eine Referenzstrecke D1 ist.
Wenn eine Bedingung 402b "Vorbeifahrtssignal (Laterne nah/ hoch)" erfüllt ist, dass die Straßenlaternen unter einem Vertikalwinkel erkannt werden, der größer als ein Schwellenwinkel ist, wechselt das Verfahren in einen Zustand 408 "Straßenlaternen nah", in dem die Straßenlaternen als nah erkannt sind. Ausgehend von dem Zustand 408 wechselt das Verfahren in den Zustand 406, wenn die Bedingung 408a "d>D2 (mit D2<D1)" erfüllt ist, dass die gefahrene Strecke größer als eine Referenzstrecke D2 ist, wobei die Referenzstrecke D1 größer als die Referenzstrecke D2 ist. Wenn das Verfahren den Zustand 406 erreicht hat, wird das "durchgehende Beleuchtungssignal" 410 erzeugt.
Fig. 4b zeigt ein weiteres Petri-Netz für den Fall, dass zumindest zwei Straßenbeleuchtungseinrichtungen erkannt werden, wobei die zweite Straßenbeleuchtungseinrichtung erst erkannt wird, wenn das Fahrzeug eine größere Strecke zurückgelegt hat.

Nachdem die Distanzmessung gestartet worden ist, wird im Zustand 404 "Straßenlaterne(n) im Bild" in einen Zustand 412 "auf Verschwinden warten" gewechselt, wenn eine Bedingung 404a "d>D3" erfüllt ist, dass die zurückgelegte Distanz d größer als eine Referenzstrecke D3 ist. Im Zustand 412 wird in einen Zustand 414 "auf weitere Straßenlaterne warten" gewechselt, wenn eine Bedingung 412a "Straßenlaterne verschwunden; Distanzmessung neu starten" erfüllt ist. Im Zustand 414 wird in den Zustand 406 "Beleuchtung" gewechselt, wenn eine Bedingung "d>D4 & Straßenlaterne aufgetaucht" erfüllt ist, dass die zurückgelegte Distanz d größer einer Referenzstrecke D4 ist und eine Straßenbeleuchtungseinrichtung erkannt wurde. Wenn das Verfahren den Zustand 406 erreicht hat, wird das "durchgehende Beleuchtungssignal" 410 erzeugt.
Falls die Straßenlaterne(n) im Zustand 404 "Straßenlaterne(n) im Bild" aus dem Sichtbereich verschwindet, noch bevor die gemessene Distanz groß genug für den Wechsel in den Zustand 412 "auf Verschwinden warten" ist, wird in den Zustand 400 "keine Beleuchtung" gewechselt. Ebenso, falls innerhalb der Distanz D4 im Zustand 414 "Auf weitere Straßenlaternen warten" keine Straßenlaterne auftaucht. Wenn die Mindestanzahl größer als zwei ist, kann man die Anzahl der auftauchenden und durchgehend sichtbaren Straßenlaternen aufsummieren. Wenn innerhalb der Entfernung D4 keine neue Straßenlaterne auftaucht, wird auf 400 "keine Beleuchtung" zurückgeschaltet oder auf einen Zwischenzustand, wenn die einzelnen Entfernungen der Straßenlaternen einzeln getrackt werden. (jede Straßenlaterne hat eigene gemessene Sichtbarkeitsdistanz). Zwischen dem Auftauchen von neuen Straßenlaternen darf höchstens die Distanz D4 vergehen.
Fig. 4c zeigt weiteres Petri-Netz für den Fall, dass keine weitere Straßenbeleuchtungseinrichtung mehr erkannt wird, und anschließend nach einer zurückgelegten Strecke erneut eine weitere Straßenbeleuchtungseinrichtung erkannt wird. Beispielsweise beim Durchfahren eines Gebiets mit durchgehender Straßenbeleuchtung, wobei zumindest eine Straßenlaterne verdeckt ist.
Ausgehend von dem Zustand 406 "Beleuchtung" wird in den Zustand 414 "auf Straßenlaterne warten" gewechselt, wenn die Bedingung 406a "keine Straßenlaterne mehr sichtbar; Distanzmessung starten" erfüllt ist. Im Zustand 414 wird immer noch das "durchgehende Beleuchtungssignal" 410 erzeugt. Wenn im Zustand 414 die Bedingung 414b "Straßenlaterne" erfüllt ist, dass wieder eine Straßenbeleuchtungseinrichtung erkannt ist, wechselt das Verfahren erneut in den Zustand 406. Wenn im Zustand 414 die Bedingung 414c "d>D6; Neustart Distanzmessung" erfüllt ist, dass die zurückgelegte Distanz größer als eine Referenzstrecke D6 ist, wechselt das Verfahren in einen unbestimmten Zustand 416 "Angstzustand", in dem das "durchgehende Beleuchtungssignal" nicht erzeugt wird. 410a. Dieser "Angstzustand" ist ein Zustand, in dem das System nicht sicher ist, ob es tatsächlich aus einem beleuchteten Straßengebiet hinausgefahren ist, oder ob lediglich keine Straßenbeleuchtungseinheit erkannt wurde, beispielsweise weil die die nächst Straßenlaterne durch Bäume verdeckt ist oder sich hiner eine Kurve oder Kuppe befindet. Wenn in diesem Zustand 416 die Bedingung 416a "Straßenlaterne" erfüllt ist, dass erneut eine Straßenbeleuchtungseinrichtung erkannt ist, wechselt das Verfahren erneut in den Zustand 406. Wenn im Zustand 416 die Bedingung 416b "d>D7 (mit D7<D1)" erfüllt ist, dass die zurückgelegte Distanz größer als eine Referenzstrecke D7 ist, wobei die Referenzstrecke D1 größer als die Referenzstrecke D7 ist, wechselt das Verfahren in den Zustand 400 "keine Beleuchtung".
Wenn man aus einem Gebiet mit durchgehender Straßenbeleuchtung herausgefahren ist, soll kein "durchgehendes Straßenbeleuchtungssignal" mehr erzeugt werden. Sobald über eine gewisse Strecke keine Straßenlaternen mehr sichtbar sind, wird das "durchgehende Beleuchtungssignal" nicht mehr erzeugt. Sobald keine Straßenlaterne mehr sichtbar ist, wird die Distanzmessung gestartet. Wenn die gefahrene Distanz d größer als eine vorgegebene Maximalstrecke ohne Beleuchtung ist, wird das Signal nicht mehr erzeugt. Sobald wieder mindestens eine Straßenlaterne im Bild auftaucht, wird die Distanzmessung angehalten (und zurückgesetzt).
Wenn die Gierrate des Fahrzeugs zu groß ist, wird die Distanzmessung angehalten (pausiert). Der Hintergrund ist der, dass sich bei einer hohen Gierrate viel im Kamerabild ändert und gegebenenfalls keine Straßenlaternen mehr erkannt werden können. Zusätzlich/ alternativ kann der Kurvenradius ausgewertet werden und/oder der Lenkwinkel mit der Geschwindigkeit (worauf wieder auf die Gierrate geschlossen werden kann). Bei Einfahrt in ein durchgehend beleuchtetes Gebiet könnte ebenfalls eine Schwelle für die Gierrate verwendet werden, um möglichst schnell bei Bedarf das "durchgehende Beleuchtungs-Signal" zu erzeugen.

Bei der Erkennung, dass sich das Fahrzeug aus dem durchgehend beleuchteten Gebiet entfernt hat, ist eine Täuschung möglich (z.B. bei Kreuzung Innerorts mit verdeckten Straßenlaternen). Es würde fälschlicherweise das Fernlicht eingeschaltet. Wenn das Verfahren direkt im Zustand "keine Beleuchtung" landen würde, müsste die gesamte Distanz mit Fernlicht durch das beleuchtete Gebiet gefahren werden. Daher wird ein unbestimmter Zustand 416 ("Angstzustand") eingeführt, bei dem befürchtet wird, dass die fehlende Beleuchtung fälschlicherweise erkannt wurde. Im Zustand 416 wird das "durchgehende Beleuchtungssignal" nicht erzeugt (Fernlicht möglich). Sobald jedoch eine einzelne Straßenlaterne auftaucht, wird sofort in den Zustand 406 "Beleuchtung" gewechselt und das "durchgehende Beleuchtungssignal" 410 wieder erzeugt. Prinzipiell kann ein ähnliches Entprell-Verhalten ohne den Zustand 416 erreicht werden, wenn die Entprell-Distanz entsprechend erhöht wird (z.B. insgesamt D6+D7). Der Zustand 416 wird eingesetzt, da dadurch die Distanz zur Fernlicht-Freigabe verkürzt werden kann. Meistens ist die Entprell-Distanz D6 ausreichend. Nur in wenigen Fällen muss innerhalb von D7 wieder auf "durchgehende Beleuchtung" zurückgeschaltet werden. Eine Zurückschaltung über den regulären Weg (Einfahrt in durchgehend beleuchtetes Gebiet) ist normalerweise länger als das Zurückschalten innerhalb der Strecke des Zustands 416 D7. Denkbar ist auch eine Auswertung der von VDD geschätzten Entfernung der Straßenlaternen, um beispielsweise mehrfach beleuchtete Fußgängerüberwege nicht als durchgehende Straßenbeleuchtung zu klassifizieren. Durch eine Erkennung von Ampeln und/oder Kreuzungen kann die Gefahr einer Fehldetektion verringert werden, da diese von VDD auch als Straßenlaternen erkannt werden könnten. Die Sichtbarkeits-Strecke kann zusätzlich durch eine minimale Sichtbarkeitsdauer (Zeit) und/oder eine maximale Sichtbarkeitsdauer (Zeit; z.B. bei Straßenlaternen die sehr weit weg sind) kombiniert werden, um die Zuverlässigkeit der Detektion zu verbessern. Dadurch kann eine durchgehende Straßenbeleuchtung, die nur sehr kurz als solche erkannt wurde, verworfen werden. Ebenso kann eine fälschlicherweise erkannte durchgehende Straßenbeleuchtung (weit weg, abseits der Straße) wieder zurückgesetzt werden, wenn sie recht lange erkannt wird, aber keine Annäherung an beleuchtetes Gebiet stattfindet. Beim Verlassen der durchgehenden Beleuchtung kann die Umgebungshelligkeit mit einbezogen werden bzw. die Helligkeit im Bereich vor dem Fahrzeug berücksichtigt werden. Je heller die Umgebung, desto länger ist die Entprellstrecke bzw. ab einer gewissen Helligkeit wird die Distanzmessung pausiert.

Es kann auch die Helligkeit im Field of expansion (der Bildbereich auf den das Fahrzeug momentan hinfährt) ausgewertet werden. Durch Nutzung von weiteren Sensoren, z.B. Abstandssensoren, kann ein Zufahren auf eine (T-)Kreuzung erkannt werden und die Entprellzeit dementsprechend angepasst und/oder die Messung pausiert werden. Wenn Spurinformationen auswertet werden, kann der Straßenverlauf vorausschauend erfasst werden. Wenn die Sichtweite der Straße hoch ist, jedoch keine Straßenlaterne sichtbar ist, fährt das Fahrzeug aus durchgehend beleuchtetem Gebiet hinaus. Ebenso kann die Umgebungshelligkeit/ Helligkeit auf der Straße bei Einfahrt in ein durchgehend beleuchtetes Gebiet genutzt werden, um die Entprellstecke zu verkürzen (Helligkeit hoch), oder zu verlängern (Helligkeit niedrig) bis ganz zu verhindern (keine Helligkeitsänderung - z.B. weit weg, abseits Straße).

Die Minimalanzahl zum Erkennen der durchgehenden Straßenbeleuchtung kann geschwindigkeitsabhängig sein. Dadurch kann bei hohen Geschwindigkeiten verhindert werden, dass bei z.B. zwei seitlich stehenden Straßenlaternen auf einer Autobahn das "durchgehende Straßenbeleuchtungssignal" ausgegeben wird, was bei einer niedrigen Geschwindigkeit durchaus sinnvoll sein kann (die Fahrtdauer zwischen zwei Straßenlaternen steigt mit abnehmender Geschwindigkeit). Autobahnen mit durchgehender Straßenbeleuchtung werden dann durch die hohe Geschwindigkeit erst nach einer relativ hohen Anzahl an Straßenlaternen als durchgehende Straßenbeleuchtung erkannt. Die Entprell-Distanzen können geschwindigkeitsabhängig gewählt werden, wodurch neben einer Distanz-Abhängigkeit eine gewisse Zeitabhängigkeit hinzukommt. Beispielsweise können bei einer hohen Geschwindigkeit die Entprellstrecken vergrößert werden, da Straßenlaternen dann nicht so dicht beieinander stehen müssen. Die (geschätzte) Höhe einer Straßenlaterne kann in die Entprell-Distanz mit einfließen, da hohe Straßenlaternen geometriebedingt einen größeren Bereich ausstrahlen können als niedrige, was sich (bei geometrischer Verdeckung) als eine größere Detektions-Distanz auswirkt. Straßenlaternen, die zu weit seitlich vom Fahrzeug aus dem Bild verschwinden, werden nicht mit berücksichtigt, da diese nicht zur Straßenbeleuchtung beitragen. Statt der gemessenen/geschätzten Distanz kann analog dazu die Höhe im Bild (=Sichtwinkel), bei dem die Straßenlaterne aus dem Bild verschwindet, ausgewertet werden. Die Kamera kann über andere Sensoren gestützt werden. Beispielsweise kann durch ein Lidar-/Radar-System die Straßenlaternen-Masten zur Auswertung mit hinzugezogen werden.

Das "durchgehende Beleuchtungssignal" (Straßenbeleuchtungssignal S) kann zum Abblenden bzw. allgemein zum Ändern der Lichtverteilung genutzt werden. Es kann ebenfalls genutzt werden, um z.B. zusammen mit der Fahrzeuggeschwindigkeit ein Stadt-Signal zu erzeugen. Dieses kann z.B. genutzt werden, um eine spezielle Stadt- Lichtverteilung einzustellen. Das Stadt-Signal kann über Navigations-Informationen plausibilisiert werden oder umgekehrt (z.B. Aktualität Kartendaten prüfen). Zusätzlich zum "durchgehende Beleuchtungssignal" kann ein "Annäherung an eine durchgehende Beleuchtungssignal" erzeugt werden (Annäherungs-Signal). Hier wird statt einem aktiven Abblenden wie beim "durchgehenden Beleuchtungssignal", das Aufblenden verhindert (da kurz darauf abgeblendet wird). Das Annäherungssignal wird erzeugt, sobald Straßenlaternen sichtbar sind (ggf. vorherige Prüfung Abstand und/oder Position). Das Annäherungssignal verhindert ein volles Aufblenden, um bei Annäherung an einen durchgehend beleuchteten Bereich nicht schnell zwischen z.B. Abblendlicht und Fernlicht hin- und herzuschalten zu müssen (Komfortfunktion). Beim Annäherungssignal sollte die Leuchtweite nicht zusätzlich verringert werden. Es sollte weiterhin möglich sein die Leuchtweite etwas zu erhöhen, wobei nur so weit erhöht werden sollte, dass eine Verringerung der erhöhten Lichtverteilung durch eine anschließende Reaktion auf ein "durchgehendes Beleuchtungssignal" nicht zu Komforteinbußen führt (Komforteinbuße durch schnelles Auf- und wieder Abblenden vermeiden). Die erzeugten Signale ("Stadt-Signal", "durchgehende Beleuchtungssignal" und "Annäherungssignal") können anderen Fahrzeugen mitgeteilt werden (gegebenenfalls über Mittelsmann/ Infrastruktur car2x). Die Fahrzeuge können dann nach Austausch der Informationen mit 2 anderen Fahrzeugen z.B. eine 2-aus-3-Entscheidung (allgemein x-aus-y-Entscheidung) fällen. Die Signale der Fahrzeuge können auch miteinander kombiniert werden: Wenn ein entgegenkommendes Fahrzeug ein "durchgehende Beleuchtungssignal" (oder "aus durchgehende Beleuchtung rausfahren-Signal") austauscht, kann man die Entprellstrecke zum Einfahren in ein durchgehend beleuchtetes Gebiet verkürzt werden oder direkt ein "Annäherungssignal" erzeugt werden.

Mit anderen Worten nutzt der hier vorgestellte Ansatz eine Distanzmessung von zurückgelegter Strecke des Fahrzeugs. Weiterhin wird eine Anzahl, eine Entfernung und eine (Bild-)Position von Straßenbeleuchtungseinrichtungen genutzt, um eine Entprell-Distanz anzupassen. Eine Gierrate des Fahrzeugs kann verwendet werden (ggf. Kurvenradius). Es kann ein unbestimmter Zustand "Angstzustand" eingeführt werden, um einen Irrtum schnell korrigieren zu können. Ein Annäherungs-Signal kann erzeugt werden, um Aufblenden vor einer Einfahrt in durchgehend beleuchtetes Gebiet zu verhindern. Dabei sind nicht alle Merkmale zwingend. Beispielsweise kann je nach Systemauslegung der Angstzustand etc. entfallen.

Die hier beschriebene Erkennung schaltet kein (oder nicht unbedingt) Stadtlicht ein, sondern stellt ein Signal bereit, das ein Abblenden ermöglicht bzw. ein Aufblenden verhindert. Eine Änderung der Entprell-Strecke wird abhängig von der Position/ Bewegung der Straßenlaternen im Bild berücksichtigt. Die Erkennung durchgehender Straßenbeleuchtung kann vorausschauend erfolgen; ein Vorbeifahren und Abstand messen ist nicht nötig. Wenn die Straßenlaternen weit oben im Bild sind und sich schnell genug bewegen (optional), wird in das beleuchtete Gebiet eingefahren (Straßenlaterne sehr nah).

Mit dem unbestimmten Zustand ("Angstzustand") wird, nachdem von einem beleuchteten Gebiet aus (z.B. Stadt) ein unbeleuchtetes Gebiet erkannt wurde, die Entprellstrecke für eine gewisse Strecke auf null Meter gesetzt. Dadurch wird sofort wieder das Signal für die durchgehende Straßenbeleuchtung gesetzt sobald eine Straßenlaterne im Bild auftaucht. Der unbestimmte Zustand (Angstzustand) ist eine Nachlauffunktion, wobei das Signal zur durchgehenden Straßenbeleuchtung schon zurückgenommen wurde und das "Stadt-Signal" (das auch allgemeiner als das Straßenbeleuchtungssignals S verstanden werden kann) nicht länger gehalten wird. Dabei kann im Zusammenhang mit einer erkannten Straßenbeleuchtung, die durch das Straßenbeleuchtungssignal signalisiert wird, und einem Vergleich der Fahrzeuggeschwindigkeit mit einer Geschwindigkeitsschwelle das "Stadt-Signal" erzeugt werden, das einen Hinweis auf das Befahren einer Straße in einer Stadt oder allgemeiner gesagt einer geschlossenen Ortschaft gibt. Beispielsweise kann das Stadtlicht dann ausgeschalten werden und bei Wiederauftauchen von Straßenbeleuchtung sofort erneut eingeschalten werden.

Die Entprellstrecke ist von der Eigenbewegung (insb. Gierrate) bzw. Änderungen im Bild abhängig. Bei einer hohen Änderung im Bild ergibt sich eine schlechte Detektionsleistung weshalb länger entprellt wird. (Im Extremfall bis zu unendlich lange) Die Helligkeit in einem (Bild-)Bereich, insbesondere das FOE (Field Of Expansion), kann zur vorausschauenden Plausibilisierung mit ausgewertet werden.

Eine Entfernungsmessung kann verwendet werden um eine T-Kreuzung zu erkennen und die Entprellstrecke zum Ausfahren aus beleuchtetem Gebiet zu verlängern (Reflexionen von Messsignalen an Hauswänden). Eine Abschätzung der Sichtweite auf der Straße ist vorteilhaft, um vorausschauend ein Ende der Beleuchtung zu erkennen (wenn die Straße gerade ist, ist die Sichtweite hoch und Straßenlaternen müssten früh sichtbar sein) Damit kann eine Anpassung der Entprellstrecke vorgenommen werden. Die bauliche Höhe der Straßenlaternen kann genutzt werden, um die Entprellstrecke anzupassen (Ausleuchtungsbereich der Straßenlaterne abschätzen). Ein "Annäherungssignal" bei (vermuteter) Annäherung an die Stadt/ durchgehend beleuchtetes Gebiet kann bereitgestellt werden, um z.B. nicht aufzublenden (jedoch nicht aktiv abzublenden). Ebenso kann ein "Verlassen-Signal" bei vermutetem Verlassen des beleuchteten Gebiets bereitgestellt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Erkennen einer beleuchteten Fahrbahn vor einem Fahrzeug (100), wobei das Verfahren (200) die folgenden Schritte aufweist:
Erkennen (202) eines ersten Lichtobjekts als erste Straßenbeleuchtungseinrichtung;
Ermitteln (204) einer zurückgelegten Strecke des Fahrzeugs (100);
Erkennen (206) eines zweiten Lichtobjekts als zweite Straßenbeleuchtungseinrichtung; und
Bereitstellen (208) eines Signals, wenn die erste Straßenbeleuchtungseinrichtung und die zweite Straßenbeleuchtungseinrichtung erkannt wurden, wobei das Bereitstellen unter Verwendung der zurückgelegten Strecke (d) erfolgt, wobei das Signal ein Erkennen einer beleuchteten Fahrbahn vor einem Fahrzeug (100) repräsentiert, wobei im Schritt des Bereitstellens (208) eine Information bereitgestellt wird, dass die zurückgelegte Strecke (d) nach einem Nichterkennen einer Straßenbeleuchtungseinrichtung, größer als eine erste Referenzstrecke (D5) ist und dass im Schritt des Bereitstellens (208) ein weiteres Signal bereitgestellt wird, wenn eine andere Straßenbeleuchtungseinrichtung erkannt wird und die zurückgelegte Strecke (d) nach dem Nichterkennen, kleiner als eine zweite Referenzstrecke (D6) ist, wobei das weitere Signal ein Erkennen einer beleuchteten Fahrbahn vor einem Fahrzeug (100) repräsentiert,
**dadurch gekennzeichnet, dass**
im Schritt des Bereitstellens (208) das Signal bereitgestellt wird, wenn anschließend an ein Nichterkennen einer Straßenbeleuchtungseinrichtung eine weitere Straßenbeleuchtungseinrichtung erkannt wird, wenn die zurückgelegte Strecke (d) nach dem Nichterkennen kleiner als die erste Referenzstrecke (D5) ist und wobei das Signal ausgesetzt wird, wenn die zurückgelegte Strecke (d) größer als die erste Referenzstrecke (D5) ist, und kein weiteres Lichtobjekt als Straßenbeleuchtungseinrichtung erkannt wird und wobei das Signal erneut unverzögert bereitgestellt wird, wenn ein weiteres Lichtobjekt als weitere Straßenbeleuchtungseinrichtung erkannt wird, und die zurückgelegte Strecke (d) kleiner als die zweite Referenzstrecke (D6) ist.

2. Verfahren (200) gemäß Anspruch 1, bei dem im Schritt des Bereitstellens (208) das Signal bereitgestellt wird, wenn die erste Straßenbeleuchtungseinrichtung über die Strecke (d) erkannt wird, die größer als eine dritte Referenzstrecke (D1) ist und/oder wenn bei dem Erkennen (206) der zweiten Straßenbeleuchtungseinrichtung die zurückgelegte Strecke (d) kleiner als eine vierte Referenzstrecke (D2) ist.

3. Verfahren (200) gemäß einem der vorhergehenden Ansprüche, bei dem im Schritt des Bereitstellens (208) das Signal bereitgestellt wird, wenn bei dem Erkennen (206) der zweiten Straßenbeleuchtungseinrichtung ein Winkel (ϕ) zwischen einer Fahrzeuglängsachse und einer Richtung zu der ersten oder der zweiten Straßenbeleuchtungseinrichtung kleiner als ein Winkel-Schwellenwert (ϕREF) ist und die zurückgelegte Strecke (d) nach dem Erkennen (206) der zweiten Straßenbeleuchtungseinrichtung größer als eine fünfte Referenzstrecke (D3) ist.

4. Verfahren (200) gemäß einem der vorhergehenden Ansprüche, bei dem im Schritt des Bereitstellens (208) das Signal bereitgestellt wird, wenn bei dem Erkennen (206) der zweiten Straßenbeleuchtungseinrichtung der Winkel (ϕ) zwischen einer Fahrzeuglängsachse und einer Richtung zu der ersten oder der zweiten Straßenbeleuchtungseinrichtung größer als der Winkel-Schwellenwert (ϕREF) ist und die zurückgelegte Strecke (d) nach dem Erkennen (206) der zweiten Straßenbeleuchtungseinrichtung größer als eine sechste Referenzstrecke (D4) ist.

5. Verfahren (200) gemäß einem der vorhergehenden Ansprüche, bei dem im Schritt des Bereitstellens (208) das Signal bereitgestellt wird, wenn während des Bereitstellens (208) zumindest eine weitere Straßenbeleuchtungseinrichtung erkannt wird.

6. Verfahren (200) gemäß einem der vorangegangenen Ansprüche, bei dem im Schritt des Bereitstellens (208) eine Anpassung von zumindest einem Parameter verändert wird, der in einem für einen nachfolgenden Schritt des Bereitstellens verwendet wird, insbesondere wobei der Parameter, der im Schritt des Bereitstellens verändert wird, die erste Referenzstrecke (D5) repräsentiert, insbesondere wobei im Schritt des Bereitstellens die erste Referenzstrecke bei einem Nichterkennen vergrößert wird.

7. Verfahren (200) gemäß einem der vorhergehenden Ansprüche, bei dem im Schritt des Bereitstellens (208) das Signal nicht bereitgestellt wird, wenn eine Umgebungshelligkeit kleiner als ein Schwellenwert ist.

8. Verfahren (200) gemäß einem der vorhergehenden Ansprüche, bei dem der Schritt des Ermittelns (204) ausgesetzt wird, wenn eine Gierrate des Fahrzeugs größer als ein Gierraten-Schwellenwert ist.

9. Verfahren zur Steuerung einer Lichtaussendung durch Scheinwerfer eines Fahrzeugs, wobei das Verfahren die folgenden Schritte aufweist:
die Schritte des Verfahren gemäß einem der Ansprüche 1 bis 8; und Verändern der Lichtaussendung durch die Scheinwerfer ansprechend auf das Signal.

10. Vorrichtung (102), die ausgebildet ist, um die Schritte eines Verfahrens (200) gemäß einem der Ansprüche 1 bis 9 in Einrichtungen durchzuführen, die dazu ausgebildet sind, die Schritte des Verfahrens (200) auszuführen.

11. Computer-Programmprodukt mit Programmcode zur Durchführung des Verfahrens (200) nach einem der Ansprüche 1 bis 9, wenn das Programm auf einer Vorrichtung oder einem Steuergerät ausgeführt wird.

## Claims

1. Method (200) for detecting an illuminated road in front of a vehicle (100), wherein the method (200) has the following steps of:
detecting (202) a first light object as a first street lighting device;
determining (204) a distance covered by the vehicle (100);
detecting (206) a second light object as a second street lighting device; and
providing (208) a signal if the first street lighting device and the second street lighting device have been detected, wherein the provision is effected using the distance (d) covered, wherein the signal represents detection of an illuminated road in front of a vehicle (100), wherein an item of information indicating that the distance (d) covered after failing to detect a street lighting device is greater than a first reference distance (D5) is provided in the providing step (208), and that a further signal is provided in the providing step (208) if another street lighting device is detected and the distance (d) covered after the failure to detect is less than a second reference distance (D6), wherein the further signal represents detection of an illuminated road in front of a vehicle (100),
**characterized in that**
the signal is provided in the providing step (208) if, after failing to detect a street lighting device, a further street lighting device is detected, if the distance (d) covered after the failure to detect is less than the first reference distance (D5), and wherein the signal is suspended if the distance (d) covered is greater than the first reference distance (D5) and no further light object is detected as a street lighting device, and wherein the signal is immediately provided again if a further light object is detected as a further street lighting device and the distance (d) covered is less than the second reference distance (D6).

2. Method (200) according to Claim 1, in which the signal is provided in the providing step (208) if the first street lighting device is detected over the distance (d) which is greater than a third reference distance (D1) and/or if, upon the detection (206) of the second street lighting device, the distance (d) covered is less than a fourth reference distance (D2).

3. Method (200) according to one of the preceding claims, in which the signal is provided in the providing step (208) if, upon the detection (206) of the second street lighting device, an angle (ϕ) between a vehicle longitudinal axis and a direction to the first or second street lighting device is less than an angle threshold value (ϕREF) and the distance (d) covered after detecting (206) the second street lighting device is greater than a fifth reference distance (D3).

4. Method (200) according to one of the preceding claims, in which the signal is provided in the providing step (208) if, upon the detection (206) of the second street lighting device, the angle (ϕ) between a vehicle longitudinal axis and a direction to the first or second street lighting device is greater than the angle threshold value (ϕREF) and the distance (d) covered after detecting (206) the second street lighting device is greater than a sixth reference distance (D4).

5. Method (200) according to one of the preceding claims, in which the signal is provided in the providing step (208) if at least one further street lighting device is detected during the provision (208) .

6. Method (200) according to one of the preceding claims, in which an adjustment of at least one parameter which is used in a subsequent step of the provision is changed in the providing step (208), in particular wherein the parameter which is changed in the providing step represents the first reference distance (D5), in particular wherein the first reference distance is increased in the providing step in the event of a failure to detect.

7. Method (200) according to one of the preceding claims, in which the signal is not provided in the providing step (208) if an ambient brightness is less than a threshold value.

8. Method (200) according to one of the preceding claims, in which the determining step (204) is suspended if a yaw rate of the vehicle is greater than a yaw rate threshold value.

9. Method for controlling light emission by headlights of a vehicle, wherein the method has the following steps:
the steps of the method according to one of Claims 1 to 8; and
changing the light emission by the headlights in response to the signal.

10. Apparatus (102) which is designed to carry out the steps of a method (200) according to one of Claims 1 to 9 in devices which are designed to carry out the steps of the method (200).

11. Computer program product having program code for carrying out the method (200) according to one of Claims 1 to 9 when the program is executed on an apparatus or a control device.

## Revendications

1. Procédé (200) de reconnaissance d'une voie de circulation éclairée devant un véhicule (100), le procédé (200) comprenant les étapes suivantes :
reconnaissance (202) d'un premier objet lumineux en tant que premier dispositif d'éclairage de la route ;
détermination (204) d'une distance parcourue du véhicule (100) ;
reconnaissance (206) d'un deuxième objet lumineux en tant que deuxième dispositif d'éclairage de la route ; et
fourniture (208) d'un signal lorsque le premier dispositif d'éclairage de la route et le deuxième dispositif d'éclairage de la route ont été reconnus,
la fourniture s'effectuant en utilisant la distance parcourue (d), le signal représentant une reconnaissance d'une voie de circulation éclairée devant un véhicule (100), une information étant fournie dans l'étape de fourniture (208), selon laquelle la distance parcourue (d) après une non-reconnaissance d'un dispositif d'éclairage de la route est supérieure à une première distance de référence (D5) et qu'un signal supplémentaire est fourni dans l'étape de fourniture (208) lorsqu'un autre dispositif d'éclairage de la route est reconnu et la distance parcourue (d) après la non-reconnaissance est inférieure à une deuxième distance de référence (D6), le signal supplémentaire représentant une reconnaissance d'une voie de circulation éclairée devant un véhicule (100),
**caractérisé en ce que**
dans l'étape de fourniture (208), le signal est fourni lorsqu'un dispositif d'éclairage de la route supplémentaire est reconnu après une non-reconnaissance d'un dispositif d'éclairage de la route si la distance parcourue (d) après la non-reconnaissance est inférieure à la première distance de référence (D5) et le signal étant suspendu si la distance parcourue (d) est supérieure à la première distance de référence (D5) et qu'aucun objet lumineux supplémentaire n'est reconnu en tant que dispositif d'éclairage de la route, et le signal étant de nouveau fourni sans retard lorsqu'un objet lumineux supplémentaire est reconnu en tant que dispositif d'éclairage de la route supplémentaire et la distance parcourue (d) est inférieure à la deuxième distance de référence (D6).

2. Procédé (200) selon la revendication 1, selon lequel le signal est fourni dans l'étape de fourniture (208) lorsque le premier dispositif d'éclairage de la route est reconnu sur la distance (d) qui est supérieure à une troisième distance de référence (D1) et/ou lorsque, lors de la reconnaissance (206) du deuxième dispositif d'éclairage de la route, la distance (d) parcourue est inférieure à une quatrième distance de référence (D2).

3. Procédé (200) selon l'une des revendications précédentes, selon lequel le signal est fourni dans l'étape de fourniture (208) lorsque, lors de la reconnaissance (206) du deuxième dispositif d'éclairage de la route, un angle (ϕ) entre un axe longitudinal du véhicule et une direction vers le premier ou le deuxième dispositif d'éclairage de la route est inférieur à une valeur de seuil d'angle (ϕREF) et la distance (d) parcourue après la reconnaissance (206) du deuxième dispositif d'éclairage de la route est supérieure à une cinquième distance de référence (D3).

4. Procédé (200) selon l'une des revendications précédentes, selon lequel le signal est fourni dans l'étape de fourniture (208) lorsque, lors de la reconnaissance (206) du deuxième dispositif d'éclairage de la route, l'angle (ϕ) entre un axe longitudinal du véhicule et une direction vers le premier ou le deuxième dispositif d'éclairage de la route est supérieur à une valeur de seuil d'angle (ϕREF) et la distance (d) parcourue après la reconnaissance (206) du deuxième dispositif d'éclairage de la route est supérieure à une sixième distance de référence (D4).

5. Procédé (200) selon l'une des revendications précédentes, selon lequel le signal est fourni dans l'étape de fourniture (208) lorsque, pendant la fourniture (208), au moins un dispositif d'éclairage de la route supplémentaire est reconnu.

6. Procédé (200) selon l'une des revendications précédentes, selon lequel l'étape de fourniture (208) comprend la modification d'une adaptation d'au moins un paramètre qui est utilisé dans une étape de fourniture suivante, le paramètre qui est modifié dans l'étape de fourniture représentant notamment la première distance de référence (D5), la première distance de référence étant notamment augmentée dans l'étape de fourniture dans le cas d'une non-reconnaissance.

7. Procédé (200) selon l'une des revendications précédentes, selon lequel le signal n'est pas fourni dans l'étape de fourniture (208) lorsqu'une luminosité ambiante est inférieure à une valeur de seuil.

8. Procédé (200) selon l'une des revendications précédentes, selon lequel l'étape de détermination (204) est suspendue lorsqu'un taux de lacet du véhicule est supérieur à une valeur de seuil de taux de lacet.

9. Procédé de commande d'une émission de lumière par les feux d'un véhicule, le procédé comprenant les étapes suivantes :
les étapes du procédé selon l'une des revendications 1 à 8 ; et
modification de l'émission de lumière par les feux en réaction au signal.

10. Arrangement (102) qui est conçu pour exécuter les étapes d'un procédé (200) selon l'une des revendications 1 à 9 dans des dispositifs qui sont conçus pour exécuter les étapes du procédé (200).

11. Produit de programme informatique comprenant un code de programme destiné à mettre en oeuvre le procédé (200) selon l'une des revendications 1 à 9 lorsque le programme est exécuté sur un arrangement ou un contrôleur.
